# FASCICULE DE BREVET EUROPEEN

(11) **EP 2 583 220 B1**
(45) Date de publication et mention de la délivrance du brevet: **05.08.2020**
(21) Numéro de dépôt: 11735490.2
(22) Date de dépôt: 14.06.2011
(51) Int. Cl.: G06K 19/077, H01Q 1/04, H01Q 7/00, H01Q 1/22, G01V 15/00

(54) **ANTENNE POUR MILIEU HUMIDE**
ANTENNE FÜR FEUCHTE MEDIEN
ANTENNA FOR HUMID AMBIENCE

(30) Priorité: 15.06.2010 FR 1054727
(43) Date de publication de la demande: 24.04.2013
(73) Titulaire: Commissariat à l'Énergie Atomique et aux Énergies Alternatives, 75015 Paris (FR)
(72) Inventeur: THOMAS, Thierry, F-38760 Varces Allieres et Risset (FR)
(74) Mandataire: Cabinet Beaumont
(86) Numéro de dépôt international: PCT/FR2011/051345
(87) Numéro de publication internationale: WO 2011/157941

(56) Documents cités:
- EP-A1- 1 675 212
- WO-A1-2007/084510
- WO-A1-2008/083719
- JP-A- 2004 336 198
- US-A1- 2003 080 918
- US-A1- 2003 231 020
- GARCÍA-GARCÍA J ET AL: "On the resonances and polarizabilities of split ring resonators", JOURNAL OF APPLIED PHYSICS, AMERICAN INSTITUTE OF PHYSICS. NEW YORK, US, vol. 98, no. 3, 10 août 2005 (2005-08-10), pages 33103-033103, XP012078207, ISSN: 0021-8979

## Description

### Domaine de l'invention

La présente invention concerne de façon générale les antennes et, plus particulièrement, la réalisation d'une antenne inductive haute fréquence.

L'invention s'applique plus particulièrement aux antennes destinées à des transmissions radiofréquence de plusieurs MHz en milieu humide, par exemple pour des systèmes de transmission de type à carte sans contact, à étiquette RFID, à transpondeur électromagnétique.

### Exposé de l'art antérieur

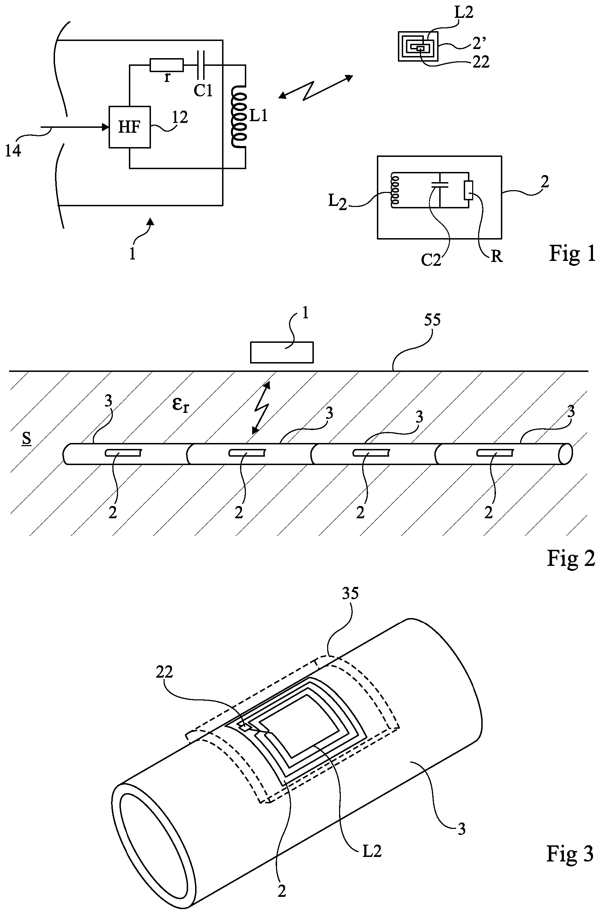

La figure 1 représente, de façon très schématique, un exemple de système de transmission radiofréquence du type auquel s'applique à titre d'exemple la présente invention.

Un tel système comporte un lecteur ou station de base 1 générant un champ électromagnétique propre à être capté par un ou plusieurs transpondeurs 2 se situant dans son champ. Ces transpondeurs 2 sont, par exemple, une étiquette électronique 2' rapportée sur un objet afin de l'identifier ou plus généralement n'importe quel transpondeur électromagnétique (symbolisé par un bloc 2 en figure 1).

Côté lecteur 1, une antenne résonante inductive est généralement représentée par un circuit résonant série constitué d'une résistance r, d'un condensateur C1 et d'un élément inductif L1 ou antenne. Ce circuit est excité par un générateur haute fréquence 12 (HF) commandé (liaison 14) par d'autres circuits non représentés de la station de base 1. Une porteuse haute fréquence est généralement modulée (en amplitude et/ou en phase) pour transmettre des informations au transpondeur.

Côté transpondeur 2, un circuit résonant, généralement parallèle, comporte un élément inductif ou antenne L2 en parallèle avec un condensateur C2 et avec une charge R représentant les circuits électroniques 22 du transpondeur 2. Ce circuit résonant capte le flux du champ magnétique haute fréquence produit par la station de base, lorsqu'il se trouve soumis à ce champ. Dans le cas d'une étiquette électronique 2', l'élément inductif L2 est formé d'un enroulement conducteur relié à une puce électronique 22. La puce renferme généralement le condensateur C2.

La représentation symbolique sous forme de circuit résonant série côté station de base et parallèle côté transpondeur est habituelle même si, en pratique, on pourra trouver des circuits résonants série côté transpondeur et parallèle côté station de base. Côté station de base, on peut également trouver une structure LC résonante où la capacité est fractionnée en une partie parallèle et une partie série. Ceci permet l'ajout d'une fonction de changement d'impédance pour, par exemple, adapter l'impédance vis-à-vis du générateur.

Les transpondeurs sont généralement dépourvus d'alimentation autonome et récupèrent l'énergie nécessaire à leur fonctionnement du champ magnétique produit par la station de base 1. Ils transmettent des informations vers la station de base en modifiant la charge (R) appliquée à leur circuit résonant de manière à moduler le courant circulant dans leur antenne inductive L2 et résultant de la force électromagnétique induite par le champ magnétique de la station de base.

Les circuits résonants du lecteur et du transpondeur sont généralement accordés sur une même fréquence de résonance **ω** (L1.C1.ω² = L2.C2.ω² = 1). Quand le transpondeur est placé dans un milieu comme l'air, la permittivité électrique du milieu enrobant le transpondeur est pratiquement celle du vide (ε₀=8,854.10⁻¹² Farad par mètre, ou permittivité relative εᵣ=1). Les caractéristiques du circuit résonant du transpondeur (accord en fréquence, facteur de qualité) sont stables et à leur valeur nominales. Toutefois, ce n'est pas le cas dans un sol (ou dans tout autre milieu humide) où la quantité variable d'eau conduit à une forte variabilité de la permittivité électrique du milieu entourant le transpondeur jusqu'à atteindre des valeurs très importante. L'eau a une permittivité électrique relative εᵣ très élevée d'une valeur d'environ 80. Si le circuit résonant du transpondeur n'est pas suffisamment protégé par une enveloppe d'un matériau de permittivité électrique stable et de faible valeur, les caractéristiques du circuit résonant du transpondeur seront fortement perturbées. Si la permittivité électrique de l'enveloppe de protection éventuellement utilisée n'est pas de faible valeur, on peut régler les caractéristiques du circuit résonant en présence de cette enveloppe, pourvu que cette permittivité soit stable.

La figure 2 représente, de façon très schématique un exemple de système de transmission en milieu humide. Il s'agit d'un système de détection de tuyaux 3 enterrés dans le sol S. Une station de base constituant un détecteur est placé à proximité de la surface 55 du sol S. Ce détecteur émet un champ magnétique radiofréquence susceptible d'être capté par des transpondeurs 2 associés aux tuyaux 3 enterrés dans le sol. Un tel système est généralement utilisé pour détecter la présente de canalisation lors de travaux de génie civil.

Un problème dans ce genre d'application est que le sol constitue un milieu humide pouvant varier d'un sol sec à un sol saturé en eau. La permittivité électrique εᵣ (pouvant atteindre plusieurs dizaines) n'est alors plus du même ordre de grandeur que l'air (εᵣ=1). Il en découle que les capacités parasites constituées entre différentes parties du circuit inductif (L2) de l'antenne du transpondeur sont fortement augmentées et que des pertes diélectriques sont ajoutées au résonateur par leur intermédiaire. Le circuit résonant du transpondeur n'est alors plus accordé et son facteur de qualité est dégradé, ce qui nuit à la transmission (télé-alimentation et communication).

Les solutions actuelles consistent à enrober le circuit résonant du transpondeur avec un matériau isolant (permittivité εᵣ de l'ordre de 1 ou allant jusqu'à quelques unités (<5)) suffisamment épais pour que le milieu humide soit suffisamment éloigné et n'interfère plus avec les caractéristiques du résonateur du transpondeur. Il est aussi possible de régler les caractéristiques du résonateur en présence du matériau de protection. L'épaisseur nécessaire (en pratique quelques millimètres) peut sembler faible mais accroît considérablement le coût des tuyaux. Pour d'autres applications, la finesse du transpondeur utilisé comme étiquette peut également être une contrainte rendant non souhaitable une augmentation d'épaisseur.

En particulier, pour que le tracé d'une canalisation puisse être repéré, des étiquettes doivent être présentes à faibles intervalles de moins d'un mètre à quelques mètres.

De plus, il n'est pas souhaitable que les canalisations aient des excroissances importantes (boitier intégrant le transpondeur par exemple).

Côté interne, même si le tuyau est destiné véhiculer du liquide, l'épaisseur du tube est généralement suffisante pour que les caractéristiques du résonateur ne soient pas perturbées.

La figure 3 est une vue en perspective et partiellement en coupe d'un exemple de technique connue pour rendre une étiquette électronique utilisable en milieu humide ayant un taux d'humidité allant de sec à saturé en eau.

Une étiquette 2 comportant une puce électronique 22 et une antenne plane L2 est rapportée sur la surface externe du tuyau 3. L'étiquette est portée par une feuille isolante souple pour pouvoir être enroulée sur le tuyau. Puis, l'ensemble est recouvert d'une couche isolante 35, souple et par exemple rectangulaire. Même en prenant des matériaux à très faible permittivité (égale ou légèrement supérieure à l'unité en valeur relative), l'épaisseur rapportée reste supérieure à plusieurs millimètres.

On pourrait penser noyer les étiquettes dans l'épaisseur du tuyau lors de la fabrication. Toutefois, cela rend la fabrication du tuyau plus complexe, donc plus onéreuse. L'insertion d'un objet dans l'épaisseur peut imposer de fortes contraintes de fabrication pour maintenir/sauvegarder la résistance mécanique du tuyau.

Il existe donc un besoin pour la réalisation d'une antenne inductive adaptée aux milieux humides.

Le document WO 2008/083719 décrit une antenne de faible taille constituée d'une première piste circulaire interrompue en un point et entourée d'une seconde piste interrompue dans deux positions diamétralement opposées. Les première et seconde pistes ne forment pas chacune un enroulement au sens d'une figure géométrique équivalente à un bobinage d'au moins deux tours de pistes conductrices.

Le document US 2003/080918 décrit un dispositif de communication sans fil et prévoit d'associer à ce dispositif des capteurs de pression et de température.

Le document WO 2007/084510 décrit diverses formes d'antennes RFID, parmi lesquelles une antenne en anneau circulaire formée de tronçons discontinus, non interconnectés.

L'article "On the résonances and polarizabilities of split ring resonators" de Garcia et al., paru dans Journal of Applied Physics, American Institute of Physics en août 2005 (vol. 98, n° 3, pages 033103-033103, décrit différentes formes de circuits résonants formés de paires de pistes.

Le document JP 2004-336198 décrit une antenne boucle à plusieurs tours sans discontinuité électrique.

### Résumé

Un objet d'un mode de réalisation de la présente invention est de proposer une antenne inductive qui pallie tout ou partie des inconvénients des antennes classiques.

Un autre objet d'un mode de réalisation de la présente invention est de proposer une antenne particulièrement adaptée aux utilisations en milieux humides.

Un autre objet d'un mode de réalisation de la présente invention est de proposer une antenne inductive peu épaisse (d'épaisseur inférieure au millimètre) et ne nécessitant pas d'isolant supplémentaire en milieu humide.

Un autre objet d'un mode de réalisation de la présente invention est de proposer une solution ne nécessitant pas de modifier le support du transpondeur.

Pour atteindre tout ou partie de ces objets ainsi que d'autres, il est prévu une antenne inductive comportant :
un substrat isolant ;
un premier enroulement conducteur plan sur une première face du substrat, interrompu à intervalles réguliers pour former une succession de paires de premières pistes conductrices ;
un second enroulement conducteur plan sur une seconde face du substrat, en regard du premier enroulement et interrompu à l'aplomb des interruptions du premier enroulement pour former une succession de paires de secondes pistes conductrices ; et
dans laquelle :
   chaque paire de premières pistes définit, avec la paire de secondes pistes en regard, un sous-ensemble résonant ;
   les deux premières pistes d'un même sous-ensemble ne sont pas connectées entre elles et sont chacune électriquement connectées à une et une seule autre première piste d'un autre sous ensemble ou à une borne de l'antenne ;
   les secondes pistes de paires voisines ne sont pas électriquement connectées les unes aux autres ; et
   une extrémité de chaque première piste est :
      électriquement connectée à une extrémité d'une seconde piste du sous-ensemble concerné.

Selon un mode de réalisation de la présente invention, le substrat est souple.

Selon un mode de réalisation de la présente invention, l'antenne présente une épaisseur inférieure à 1 millimètre.

Selon la présente invention, l'antenne comporte au moins deux sous-ensembles.

Selon un mode de réalisation de la présente invention, l'antenne comporte en outre un demi-sous-ensemble formé d'une première piste en regard d'une seconde piste et couplé à au moins un sous-ensemble.

On prévoit également un résonateur comportant une antenne dont les bornes sont interconnectées.

On prévoit également une étiquette électronique adaptée aux milieux humides, comportant un circuit électronique connecté à une antenne.

Selon un mode de réalisation de la présente invention, un circuit d'adaptation comportant au moins un élément inductif et un élément capacitif est intercalé entre l'antenne et le circuit électronique.

On prévoit également une canalisation comportant au moins une étiquette électronique.

On prévoit également un emballage comportant au moins une étiquette électronique.

On prévoit également un transpondeur électromagnétique comportant une étiquette électronique et un capteur connecté au circuit électronique.

On prévoit également l'utilisation d'une étiquette dans le sol.

On prévoit également une canalisation comportant au moins un résonateur.

On prévoit également un emballage comportant au moins un résonateur.

On prévoit également un transpondeur électromagnétique comportant au moins un résonateur et un capteur connecté au circuit électronique.

On prévoit également l'utilisation d'un résonateur dans le sol.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, représente, de façon schématique et sous forme de blocs, un exemple de système de transmission radiofréquence du type auquel s'applique la présente invention ;
la figure 2, décrite précédemment, est une représentation schématique d'une installation à laquelle s'applique plus particulièrement la présente invention ;
la figure 3, décrite précédemment, est une perspective schématique et partiellement en coupe d'une technique connue ;
la figure 4 est un schéma-bloc d'un mode de réalisation d'un transpondeur selon la présente invention ;
la figure 5 est une vue en perspective d'une antenne selon un mode de réalisation de la présente invention ;
la figure 6 est une vue en coupe selon le plan V de la figure 5 ;
la figure 7 est une vue en coupe schématique d'un premier type de sous-ensemble d'une antenne selon la présente invention ;
la figure 7A représente le schéma électrique équivalent du sous-enscmblc de la figure 7 ;
la figure 8 est une vue en coupe schématique d'un deuxième type de sous-ensemble d'une antenne ;
la figure 8A représente le schéma électrique équivalent du sous-ensemble de la figure 8 ; et
la figure 9 illustre schématiquement un autre exemple d'application d'une antenne selon la présente invention.

### Description détaillée

De mêmes éléments ont été désignés par de mêmes références aux différentes figures qui ont été tracées sans respect d'échelle. Par souci de clarté, seuls les éléments utiles à la compréhension de l'invention ont été représentés et seront décrits. En particulier, les stations de base auxquelles sont destinées des antennes de transpondeur qui vont être décrites n'ont pas été détaillées, l'invention étant compatible avec les diverses stations de bases et détecteurs usuels et n'en requiert pas de modification. De plus, les signaux de modulation de la charge constituée par le transpondeur n'ont pas non plus été détaillés, l'invention étant compatible avec les signaux habituellement utilisés pour ce genre de transpondeurs. L'invention est par ailleurs compatible avec les puces électroniques actuellement disponibles pour ce genre de transpondeurs.

Pour rendre l'accord de l'étiquette insensible au milieu humide dans lequel elle est plongée, on prévoit d'augmenter la valeur capacitive de son circuit résonant. Ainsi, les capacités parasites présentes entre les différentes parties du circuit et dépendantes de la permittivité du milieu n'apporte, même avec une permittivité de forte valeur, qu'une contribution négligeable sur l'accord du circuit résonant. Une difficulté réside alors dans la diminution de la valeur de l'inductance nécessaire pour compenser l'augmentation de la capacité pour une fréquence de résonance donnée (dans les applications que vise plus particulièrement la présente invention, entre 10 et 100 MHz). Pour réduire l'inductance, on aurait pu penser réduire le nombre de tours des enroulements plans formant l'antenne (l'inductance varie comme le carré du nombre de tours). Mais, plus on réduit le nombre de tours, moins la tension récupérée aux bornes de l'antenne est importante (la tension récupérée varie comme le nombre de tours). Or, la tension récupérée doit être suffisante pour extraire l'énergie nécessaire au fonctionnement de la puce de l'étiquette.

On aurait pu penser augmenter le format de l'inductance (la tension récupérée varie comme le carré du facteur d'échelle) tout en réduisant le nombre de tours (l'inductance varie comme le facteur d'échelle). Mais la taille de l'antenne alors nécessaire serait souvent incompatible avec l'application.

Par ailleurs, la contrainte d'épaisseur empêche l'utilisation de composants discrets qui peut être nécessaire, notamment pour incorporer un élément capacitif de forte valeur.

Ainsi, on prévoit de découper le circuit de l'antenne résonante inductive en sous-ensembles ou en paires de tronçons connectés de façon particulière entre eux pour constituer des sous-ensembles résonants ayant tous la même fréquence de résonance, chaque sous-ensemble ayant une valeur d'inductance suffisamment faible pour que l'élément capacitif participant au sous-ensemble concerné ait une valeur suffisante à rendre négligeable les capacités parasites dépendant de la permittivité du milieu humide, même avec une forte permittivité.

Dans un mode de réalisation simplifié, les bornes de l'antenne résonante ainsi réalisée sont connectées directement l'une à l'autre. On obtient alors un résonateur simple dont les caractéristiques de fréquence d'accord et de facteur de qualité ne sont pas perturbées par un milieu humide, un tel résonateur est susceptible de répondre à des applications de simple marquage.

Dans un mode de réalisation adapté à fonctionner avec une puce électronique, il peut être nécessaire d'intercaler un circuit d'adaptation entre l'antenne résonante inductive et cette puce électronique.

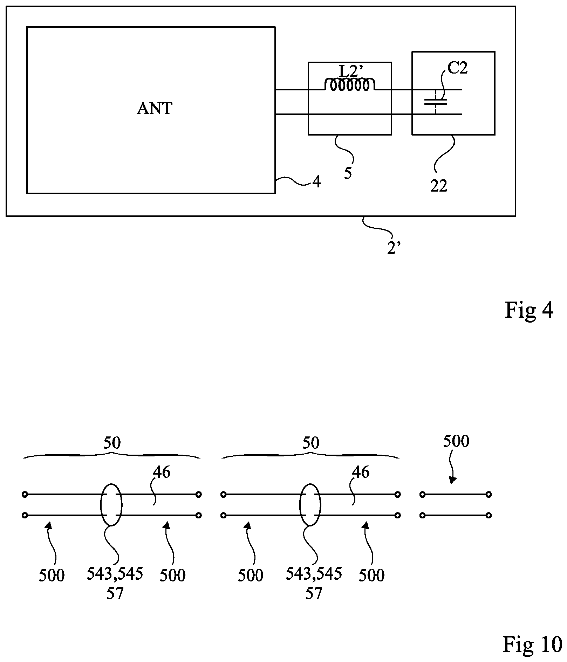

La figure 4 est un schéma-bloc d'un tel mode de réalisation.

Un résonateur 4 (ANT) formé de sous-ensembles résonants dont des exemples seront décrits plus loin est connecté à une puce électronique 22 par l'intermédiaire d'un circuit d'adaptation 5. Ce circuit d'adaptation est, par exemple constitué d'une inductance (par exemple un enroulement inductif plan) en série avec les enroulements du résonateur. Un élément capacitif C2 participe à l'adaptation mais peut être intégré dans la puce 22 comme cela est représenté. L'élément C2 est en parallèle sur les circuits électroniques de la puce 22. L'inductance L2' est préférentiellement de petite taille par rapport à la taille de l'antenne résonante inductive 4. L'élément inductif L2' est choisi pour que le circuit L2'C2 soit accordé sur la fréquence du champ radiofréquence, pour obtenir un effet de surtension. L'élément inductif L2', n'ayant pas besoin de récupérer une tension induite par le champ magnétique radiofréquence, sera choisi de préférence de petite taille, ainsi les perturbations apportées par le milieu humide sur les caractéristiques de résonance du circuit L2'C2 n'influencent que peu le fonctionnement de l'étiquette. Dans la description qui suit, on appellera antenne l'antenne résonante inductive 4.

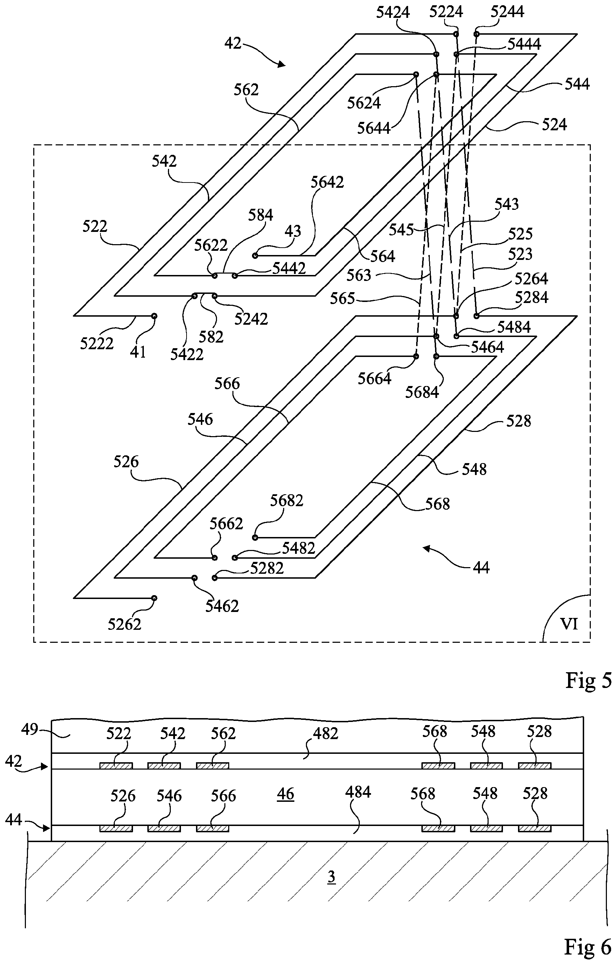

La figure 5 est une vue schématique en perspective d'un mode de réalisation d'une antenne 4 pour transpondeur 2' en milieu humide.

La figure 6 est une vue en coupe selon le plan VI de la figure 5.

L'antenne 4 est formée de deux enroulements plans 42 et 44 conducteurs identiques sur les deux faces d'un substrat isolant 46. Les enroulements sont à l'aplomb l'un de l'autre. Le substrat est, par exemple, une feuille isolante souple du type de celles habituellement utilisées pour les antennes planes. Les enroulements sont interrompus, de préférence à intervalles réguliers, pour former sur chaque face du substrat un ensemble de pistes conductrices identiques et superposées formant des tronçons de ligne micro-ruban, ces tronçons de ligne micro-ruban sont regroupés par deux de manière contigüe suivant le tracé des enroulements formant des sous-ensembles résonants.

Lorsque l'on parle d'enroulement on entend une figure géométrique équivalente à un bobinage d'au moins deux tours de pistes conductrices.

Lorsque l'on parle d'un enroulement plan ou d'une antenne plane, cela n'exclut pas que le substrat puisse être souple pour qu'au final, l'antenne épouse la forme du dispositif (par exemple, le tuyau) sur lequel elle est placée.

Dans un même sous-ensemble résonant, les pistes conductrices des deux tronçons de ligne sont connectées au point de continuité géométrique suivant le tracé des enroulements selon deux modes de réalisation qui seront exposés par la suite. Les sous-ensembles résonants sont interconnectés entre eux suivant le tracé des enroulements entre une extrémité d'un premier sous-ensemble connectée à une borne 41 de l'antenne 4 et une extrémité d'un dernier sous-ensemble connectée à une borne 43 de l'antenne 4. Les connexions sont réalisées aux moyens de liaisons électriques sur une même face ou de liaisons électriques traversantes d'une face à l'autre (vias).

Selon le mode de réalisation de la figure 5, l'antenne est formée de trois sous-ensembles résonants (qui sont respectivement identifiés par les deux premiers chiffres 52, 54 et 56 des références) de deux tronçons de lignes micro-ruban formant un ensemble de quatre pistes conductrices, chaque sous-ensemble comportant chacun deux premières pistes 522, 524, 542, 544, 562, 564 sur la première face du substrat en regard de deux secondes pistes 526, 528, 546, 548, 566, 568 sur la seconde face. Les premiers tronçons de ligne micro-ruban de chaque sous-ensemble résonant sont formés respectivement des couples de pistes 522 et 526, 542 et 546, 562 et 566, et les seconds tronçons sont formés respectivement des couples de pistes 524 et 528, 544 et 548, 564 et 568. Les deux pistes d'un même sous-ensemble résonant et d'une même face sont géométriquement l'une à la suite de l'autre dans l'enroulement 42 ou 44 correspondant.

Ainsi, une première borne 41 de l'antenne 4 est connectée à une première extrémité 5222 d'une piste 522 (par exemple et arbitrairement décrivant une demi-boucle) dont la seconde extrémité 5224 fait face sans être connectée à une seconde extrémité 5244 d'une piste 524 d'un premier sous-ensemble 52. La piste 524 poursuit l'enroulement 42 et est connectée (connexion 582), par sa première extrémité 5242, à la première extrémité 5422 d'une piste 542 du deuxième sous-ensemble 54. Cette structure est reproduite sur tout le premier enroulement 42. Ainsi, une première extrémité 5622 d'une piste 562 du troisième sous-ensemble 56 est électriquement connectée (connexion 584) à l'extrémité 5442 de la piste 544 du sous-ensemble 54. Une seconde extrémité 5624 de la piste 562 fait face (sans être connectée) à la seconde extrémité 5644 d'une piste 564 du sous-ensemble 56. Une première extrémité 5642 de la piste 564 termine l'enroulement par une connexion à une seconde borne 43 de l'antenne.

Côté seconde face, un tracé identique est reproduit avec les secondes pistes 526, 528, 546, 548, 566 et 568 des sous-ensembles 52, 54 et 56. Les premières bornes respectives 5262, 5462, 5662, 5282, 5482 et 5682 des pistes 526, 546, 566, 528, 248 et 568 sont toutefois laissées en l'air.

Dans le mode de réalisation de la figure 5, les secondes extrémités respectives 5224, 5424 et 5624 des pistes 522, 542 et 562 du premier enroulement 42 sont reliées (par exemple par des vias, respectivement 523, 543 et 563) aux secondes extrémités respectives 5284, 5484 et 5684 des pistes 528, 548 et 568 du sous-ensemble correspondant, formées dans le second enroulement 44. Les secondes extrémités respectives 5244, 5444 et 5644 des pistes 524, 544 et 564 du premier enroulement 42 sont reliées aux secondes extrémités respectives 5264, 5464 et 5664 des pistes 526, 546 et 566 du sous-ensemble correspondant, formées dans le second enroulement 44.

En variante, les connexions 582 et 584 sont sur l'enroulement 44 (connectant respectivement les extrémités 5462 et 5282 et les extrémités 5662 et 5482) et les secondes extrémités 5422, 4622, 4242 et 5442 des pistes 542, 524, 562 et 544 sont laissées en l'air. Dans cette variante, les bornes de l'antenne correspondent alors aux extrémités 5262 et 5682 des pistes 526 et 568.

Les deux faces sont recouvertes d'un verni isolant 482, 484 (figure 6), après avoir rapporté un circuit électronique (puce 22), avec interposition éventuelle d'un circuit d'adaptation 5. L'ensemble peut alors être rapporté (par exemple collé) sur la face externe du tuyau 3. Enfin, un film isolant 49 est rapporté sur l'ensemble.

On peut considérer que chaque sous-ensemble résonant 52, 54, 56 de pistes représente une connexion de type Moebius entre deux tronçons de ligne (cf. par exemple, l'article "Analysis of the Moebius Loop Magnetic Field Sensor" de P. H. Duncan, paru dans IEEE Transaction on Electromagnetic Compatibility, mai 1974 qui décrit un exemple de connexion de type Moebius avec deux tronçons de ligne coaxiale). Les différents sous-ensembles résonants sont alors placés géométriquement bout-à-bout dans une forme enroulée sur elle-même, la connexion électrique entre deux sous-ensembles voisins ne s'effectuant de préférence que dans un seul niveau conducteur. Il n'y a pas de continuité électrique via un même sous-ensemble entre les deux connexions électriques qui relient ce sous-ensemble aux sous-ensembles voisins ou aux bornes 41, 43 de l'antenne 4.

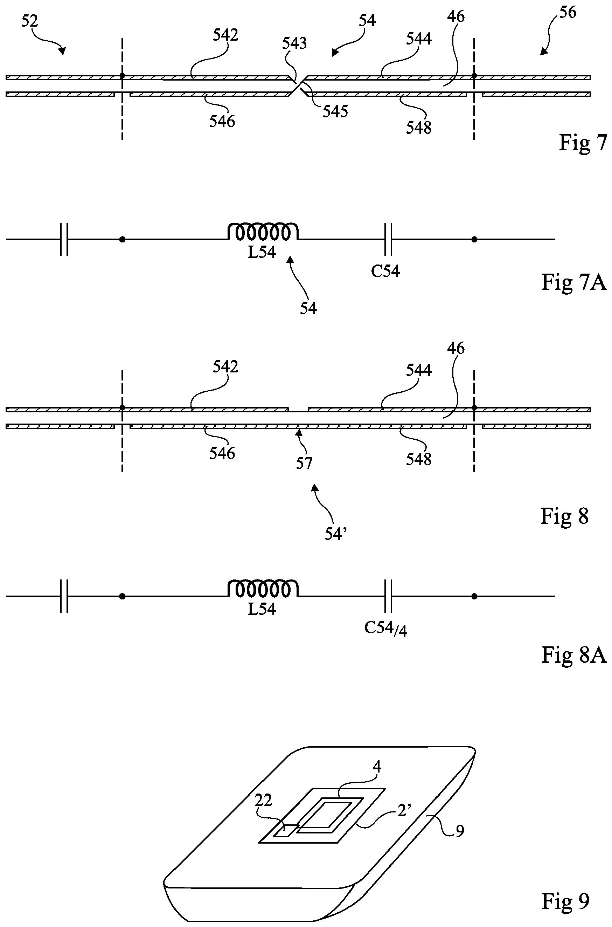

La figure 7 est une vue en coupe d'un des sous-ensembles (par exemple, le sous-ensemble résonant 54) de la figure 5 dans une représentation déroulée.

La figure 7A représente le schéma-électrique équivalent du sous-ensemble 54 de la figure 7.

Chaque première piste 542 ou 544 réalisée dans le premier niveau ou enroulement conducteur est reliée, par sa seconde extrémité et par la connexion 543, respectivement 545, à la seconde piste 548 ou 546 à l'aplomb de l'autre première piste dans l'autre niveau ou enroulement (connexion croisée). Les premières extrémités des pistes 542 et 544 définissent des premières extrémités des pistes 546 et 548 sont laissées en l'air.

D'un point de vue électrique et comme l'illustre la figure 7A, Le schéma électrique équivalent d'un tel sous-ensemble revient à disposer électriquement, en série, une inductance de valeur L54 et un condensateur de valeur C54. L'inductance L54 représente l'inductance d'une seule piste conductrice équivalente à l'association des pistes conductrices du sous-ensemble 54 augmentée des mutuelles inductances entre cette piste équivalente et les pistes équivalentes associées de la même manière aux autres sous-ensembles. Le condensateur C54 représente la capacité formée par les pistes du sous-ensemble 54 entre les pistes 542 et 544 du premier niveau et les pistes 546 et 548 du second niveau (en tenant compte de la permittivité électrique du substrat isolant 46). Les différents circuits résonants sont connectés électriquement en série pour former l'antenne.

L'impédance du sous-ensemble résonant 54 est, dans ce mode de réalisation (en négligeant les pertes ohmiques dans les pistes conductrices et les pertes diélectriques), Z = jL54ω+1/jC54ω.

La figure 8 est une vue en coupe d'un sous-ensemble selon un exemple.

Selon cet example, les secondes extrémités respectives des pistes 542 et 544 du premier enroulement sont laissées en l'air (non connectées) et les deuxièmes extrémités respectives des pistes 546 et 548 du second enroulement d'un même sous-ensemble sont interconnectées (connexion 57). Le reste n'est pas modifié par rapport au premier mode de réalisation.

D'un point de vue électrique et comme l'illustre la figure 8A, en supposant les pistes de même longueur dans les deux modes de réalisation, celui des figures 8 et 8A revient à une connexion en série d'un élément inductif de valeur L54 avec un élément capacitif de valeur C54/4, où L54 et C54 représentent les inductances et capacités du sous-ensemble 54 définies en relation avec la figure 7A.

L'impédance d'une paire de tronçons dans ce mode de réalisation est (en négligeant les pertes ohmiques dans les pistes conductrices et les pertes diélectriques) Z = jL54ω+1/j(C54/4)ω.

Cet exemple réduit la capacité équivalente mais évite les vias d'interconnexion dans chaque sous-ensemble.

Le mode de réalisation et l'exemple ci-dessus sont combinables.

La structure particulière d'antenne proposée permet, pour une fréquence d'accord donnée, de réaliser des sous-ensembles inductifs de faible valeur, donc associés à des capacités de forte valeurs (donc insensibles à la variation de capacités parasites sensibles au milieu humide).

On tire alors profit de l'épaisseur du diélectrique qui permet de réaliser une capacité non négligeable (supérieure à 150 pF).

Les longueurs seront adaptées à la fréquence de travail de l'antenne pour que chaque sous-ensemble respecte l'accord, c'est-à-dire que LCω² = 1 (L54C54ω² pour le sous-ensemble 54 suivant le mode de réalisation de la figure 7A et L54C54/4ω² pour le sous-ensemble 54 suivant le mode de réalisation de la figure 8A).

Il est possible d'utiliser une règle approchée pour dimensionner l'antenne. Pour cela, on considère l'inductance unitaire L0 égale à l'inductance d'un enroulement équivalent à l'association en parallèle de deux enroulements 42 et 44 divisée par le nombre de tours élevé au carré (le nombre de tours communs aux deux enroulements 42 et 44). On considère également la capacité globale C0 égale à la capacité totale comprise entre les pistes du premier niveau et les pistes du second niveau en tenant compte de la permittivité électrique du substrat isolant 46. Si l'on répartit de manière régulière n sous-ensembles résonants par tour d'enroulement, la règle approchée à respecter est L0C0 (ω/n)² = 1 dans le premier mode de réalisation (figure 7) et L0 (C0/4) (ω/n)² = 1 dans l'exemple (figure 8). Dans le cas où les sous-ensembles résonants occupent plus d'un tour, on tient compte du nombre de tours. Par exemple, pour deux tours, on prendra n = 1/2.

L'impédance équivalente de l'antenne 4 se déduit d'une mise en série des impédances Z de chaque sous-ensemble. La tension récupérée par l'antenne 4, lorsque celle-ci est placée dans un champ magnétique peut être calculée suivant la charge connectée à l'antenne en considérant qu'une source de tension est insérée en série avec son impédance équivalente. La valeur de cette source de tension correspond à la force électromotrice qui serait induite par le champ magnétique radiofréquence dans un enroulement équivalent à l'association en parallèle des deux enroulements 42 et 44.

On voit que l'on peut donc jouer en fonction de la distribution des sous-ensembles de l'exemple ou du mode de réalisation sur les longueurs des éléments conducteurs et les valeurs capacitives. Les valeurs des éléments capacitifs ne sont désormais plus négligeables et l'antenne est moins sensible aux perturbations dues à son environnement.

Former ainsi une antenne permet en outre de fractionner le circuit électrique et évite les éléments inductifs de trop grande longueur dans lequel le courant ne parviendrait pas à circuler de manière homogène (amplitude et phase). En effet, la connexion des paires entre-elles revient à connecter en série plusieurs circuits résonants de même fréquence de résonance. Plus les inductances des circuits sont de valeurs faibles, moins les dérivations de courant par effets des capacités parasites seront importantes.

Les différents sous-ensembles n'ont pas nécessairement les mêmes longueurs, pourvu que chaque sous-ensemble respecte, le cas échéant avec l'interposition d'un condensateur, la relation de résonance.

Des condensateurs peuvent le cas échéant être intercalés entre différents sous-ensembles. Toutefois, pour ne pas nuire à l'épaisseur, on préférera jouer sur l'épaisseur du substrat 46.

Dans le mode de réalisation illustré par la figure 5, les épaisseurs mises en jeu sont préférentiellement des ordres de grandeur suivants :
substrat 46 : moins de 200 µm ;
couches conductrices de réalisation des enroulements 42 et 44 : moins de 50 µm, par exemple 35 µm ;
vernis 482 et 484 : de l'ordre de quelque dizaines de µm ;
film 49 : au plus quelques centaines de µm, de préférence, moins de 100 µm.

Ces épaisseurs peuvent varier mais on voit que le transpondeur réalisé est particulièrement fin (d'une épaisseur inférieure à 1 mm dans le mode de réalisation préféré) tout en étant insensible aux variations des capacités parasites dues à la présence du milieu environnant humide.

A titre d'exemple particulier de réalisation, une antenne telle qu'illustrée par la figure 5 et adaptée à un fonctionnement à une fréquence de 13,56 Mhz a été réalisé sur un substrat d'épaisseur de 100 µm ayant une capacité de 42,5 pF/cm2, sous la forme de cinq spires rectangulaires sur chaque face du substrat avec les caractéristiques suivantes (en négligeant les variations de longueur entre les sous-ensembles) :
taille des spires : environ 210 mm par 50 mm ;
largeur des pistes de cuivre rapportées sur le substrat (1,82 mm) ;
inductance L0 = 300 nH ;
capacité C0 = 1850 pF, soit C54 =185 pF dans le premier mode de réalisation et C54 = 370 pF (C54/4 = 93 pF) dans le second mode de réalisation.

La réalisation pratique de l'antenne, donc du transpondeur est à la portée de l'homme du métier à partir des indications fonctionnelles données ci-dessus et en utilisant des techniques de fabrications usuelles dans la fabrication des circuits imprimés sur support flexible et fin. En particulier, la réalisation des interconnexions entre les niveaux dans le mode de réalisation des figures 5 et 7 peut requérir un décalage des extrémités respectives des pistes dans chacun des enroulements.

La figure 9 illustre un autre exemple d'application d'une antenne adaptée aux milieux humides. Selon cet exemple, une étiquette électronique 2' comportant une telle antenne 4 est rapportée sur un emballage de produit frais (les emballages peuvent contenir différents produits frais ayant des teneurs en eau variées, être recouvert de givre ou non, les produits ainsi emballés peuvent être empilés ou non en respectant un arrangement ou en vrac).

Un avantage des structures décrites est qu'elles sont compatibles d'un point de vue réception d'un flux magnétique (et émission d'un champ magnétique en considérant le courant circulant le long de l'antenne) avec des bobinages d'un grand nombre de tours, de préférence entre 5 et 15 tours.

La figure 10 est une représentation schématique d'une antenne selon un autre mode de réalisation. Comme dans les autres modes de réalisation, l'antenne comporte au moins deux sous-ensembles 50, formés chacun de deux paires 500 de pistes couplées l'une à l'autre par une connexion 57 ou par les connexions 543 et 545. Cette structure est complétée par un demi-sous-ensemble 500 constitué d'une paire de pistes additionnelle. Le cas échéant, le demi-sous-ensemble n'est pas en terminaison de l'antenne mais est intercalé entre deux sous-ensembles. La présence du demi-sous-ensemble supplémentaire peut servir à ajuster la longueur de l'antenne, à reporter les bornes terminales de l'antenne sur une même face du substrat, etc.

A titre d'exemples particuliers de réalisation, des antennes inductives respectant la structure décrite ont été réalisées avec les dimensions suivantes.

### Exemple 1 :

Substrat : matériau connu sous la dénomination commerciale Kapton de 50 µm d'épaisseur (εᵣ = 3,3).

Enroulement : spirale rectangulaire de 5 spires rectangulaires respectivement de 47,5*212 mm, 50,5*215 mm, 53,5*218 mm, 56,5*221 mm et 59,5*224 mm.

Largeur des pistes conductrices : 1,07 mm.

Découpe des pistes : deux paires de pistes par spire (interruptions au milieu de chaque petit côté de chaque spire et milieux des sous-ensembles au milieu des grands côtés).

Type de sous-ensembles : connexion croisée du type des connexions 543 et 545, c'est-à-dire qu'une extrémité de chaque première piste est électriquement connectée à une extrémité d'une seconde piste du sous-ensemble concerné. Dix sous-ensembles au total.

### Exemple 2 :

Substrat : matériau connu sous la dénomination commerciale Kapton de 50 µm d'épaisseur (εᵣ = 3,3).

Enroulement : spirale rectangulaire de 6 spires rectangulaires respectivement de 47*211,75 mm, 49,5*214,25 mm, 52*216,75 mm, 54,5*219,25 mm, 57*221,75 mm et 59,5*224,25 mm.

Largeur des pistes conductrices : 0.89 mm.

Découpe des pistes : une paire de pistes par spire (interruptions au milieu de chaque petit côté de chaque spire et milieux des sous-ensembles au milieu de l'autre petit côté).

Type de sous-ensembles : connexion droite sur une face du type des connexions 57, c'est-à-dire qu'une extrémité de chaque première piste est non connectée, les secondes pistes de chaque sous-ensemble étant interconnectées. Six sous-ensembles au total.

### Exemple 3 :

Substrat : matériau connu sous la dénomination commerciale FR4 de 100 µm d'épaisseur (εᵣ = 4,8).

Enroulement : spirale rectangulaire de 6 spires rectangulaires respectivement de 20*100 mm, 18*98 mm, 16*96 mm, 14*94 mm, 12*92 mm et 10*90 mm.

Largeur des pistes conductrices : 0,66 mm.

Découpe des pistes : une paire de pistes par lot de deux spires (interruptions et milieu des sous-ensembles au milieu d'un même petit côté de chaque spire).

Type de sous-ensembles : connexion croisée d'une face à l'autre.

D'autres applications d'une telle antenne et d'un tel transpondeur peuvent être envisagées. Par exemple, un ou plusieurs capteurs de grandeurs physiques, par exemple la pression, la température, l'hygrométrie, etc., peuvent être connectés au circuit électronique du transpondeur, des informations représentatives de ces grandeurs étant transmises à un lecteur distant au moyen de l'antenne.

L'antenne boucle décrite dans le document WO 2008/083719 pourrait tout au plus s'apparenter à un des sous-ensembles de l'antenne inductive décrite.

Divers modes de réalisation ont été décrits, diverses variantes et modifications apparaîtront à l'homme de l'art. En particulier, les dimensions à donner aux pistes conductrices dépendent de l'application et leur calcul est à la portée de l'homme du métier à partir des indications fonctionnelles données ci-dessus et de la fréquence de résonance et de la taille d'antenne souhaitées.

## Revendications

1. Antenne inductive comportant :
un substrat isolant (46) ;
un premier enroulement conducteur plan (42) sur une première face du substrat, interrompu à intervalles réguliers pour former une succession de paires de premières pistes conductrices (522, 524 ; 542, 544 ; 562, 564) ;
un second enroulement conducteur plan (44) sur une seconde face du substrat, en regard du premier enroulement et interrompu à l'aplomb des interruptions du premier enroulement pour former une succession de paires de secondes pistes conductrices (526, 528 ; 546, 548 ; 566, 568); chaque paire de premières pistes définissant, avec la paire de secondes pistes en regard, un sous-ensemble résonant (52, 54, 56) et l'antenne comportant au moins deux sous-ensembles résonants ;
les deux premières pistes d'un même sous-ensemble n'étant pas connectées entre elles et étant chacune électriquement connectées à une et une seule autre première piste d'un seul autre sous-ensemble ou à une borne (41, 43) de l'antenne ;
les secondes pistes de paires voisines de deux sous-ensembles voisins n'étant pas électriquement connectées les unes aux autres ; et
une extrémité (5224, 5244, 5424, 5444, 5624, 5644) de chaque première piste étant électriquement connectée (523, 543, 563, 525, 545, 565) à une extrémité (5284, 5264, 5484, 5464, 5684, 5664) d'une seconde piste du sous-ensemble concerné.

2. Antenne selon la revendication 1, dans laquelle le substrat (56) est souple.

3. Antenne selon l'une quelconque des revendications précédentes, présentant une épaisseur inférieure à 1 millimètre.

4. Antenne selon l'une quelconque des revendications 1 à 3, comportant en outre un demi-sous-ensemble formé d'une première piste en regard d'une seconde piste et couplé à au moins un sous-ensemble.

5. Résonateur comportant une antenne (4) selon l'une quelconque des revendications précédentes dont les bornes (41, 43) sont interconnectées.

6. Etiquette électronique adaptée aux milieux humides, comportant une antenne et un circuit électronique connecté à l'antenne (4), dans laquelle l'antenne est conforme à l'une quelconque des revendications 1 à 4.

7. Etiquette électronique selon la revendication 6, dans laquelle un circuit d'adaptation (5) comportant au moins un élément inductif (L2') et un élément capacitif (C2) est intercalé entre l'antenne et le circuit électronique.

8. Canalisation (3) comportant au moins une étiquette électronique (2') selon la revendication 6 ou 7.

9. Emballage (9) comportant au moins une étiquette électronique (2') selon la revendication 6 ou 7.

10. Transpondeur électromagnétique comportant une étiquette conforme à la revendication 6 ou 7 et un capteur connecté au circuit électronique.

11. Utilisation d'une étiquette conforme à la revendication 6 ou 7, dans le sol.

12. Canalisation (3) comportant au moins un résonateur (4) selon la revendication 5.

13. Emballage (9) comportant au moins un résonateur (4) selon la revendication 5.

14. Transpondeur électromagnétique comportant au moins un résonateur (4) selon la revendication 4 et un capteur connecté au circuit électronique.

15. Utilisation d'un résonateur conforme à la revendication 5, dans le sol.

## Patentansprüche

1. Eine induktive Antenne, die Folgendes aufweist:
ein isolierendes Substrat (46);
eine erste, planare leitende Wicklung (42) auf einer ersten Oberfläche des Substrats, die in regelmäßigen Abständen unterbrochen ist, um eine Reihe von Paaren erster Leiterbahnen (522, 524; 542, 544; 562, 564) zu bilden;
eine zweite planare leitende Wicklung (44) auf einer zweiten Oberfläche des Substrats, die der ersten Wicklung gegenüberliegt und den Unterbrechungen in der ersten Wicklung gegenüberliegend unterbrochen ist, um eine Reihe von Paaren zweiter leitender Bahnen (526, 528; 546, 548; 566, 568) zu bilden, wobei jedes Paar erster Bahnen mit dem gegenüberliegenden Paar zweiter Bahnen eine resonante Unterbaugruppe (52, 54, 56) definiert;
wobei die ersten beiden Bahnen einer gleichen Unterbaugruppe nicht miteinander verbunden sind und jede mit einer und nur einer anderen ersten Leiterbahn einer anderen Unterbaugruppe oder mit einem Anschluss (41, 43) der Antenne elektrisch verbunden ist;
wobei die zweiten Bahnen benachbarter Paare nicht elektrisch miteinander verbunden sind; und
wobei ein Ende (5224, 5244, 5424, 5444, 5624, 5644) jeder ersten Bahn mit einem Ende (5284, 5264, 5484, 5464, 5684, 5664) einer zweiten Bahn der betreffenden Unterbaugruppe elektrisch verbunden ist (523, 543, 563, 525, 545, 565).

2. Antenne nach Anspruch 1, wobei das Substrat (56) flexibel ist.

3. Antenne nach einem der vorhergehenden Ansprüche aufweisend eine Dicke von weniger als 1 Millimeter.

4. Antenne nach einem der Ansprüche 1 bis 3, ferner aufweisend eine halbe Unterbaugruppe, die aus einer ersten Bahn gegenüber einer zweiten Bahn besteht und die mit wenigstens einer Unterbaugruppe gekoppelt ist.

5. Ein Resonator aufweisend eine Antenne (4) nach einem der vorhergehenden Ansprüche mit miteinander verbundenen Anschlüssen (41, 43).

6. Ein elektronisches Etikett, das an feuchte Umgebungen angepasst ist, das eine elektronische Schaltung, die mit einer Antenne (4) verbunden ist, aufweist, wobei die Antenne eine nach einem der Ansprüche 1 bis 4 ist.

7. Elektronisches Etikett nach Anspruch 6, wobei eine Anpassungsschaltung (5), die wenigstens ein induktives Element (L2') und ein kapazitives Element (C2) aufweist, zwischen der Antenne und der elektronischen Schaltung angeordnet ist.

8. Eine Leitung (3) aufweisend wenigstens ein elektronisches Etikett (2') nach Anspruch 6 oder 7.

9. Eine Verpackung (9) aufweisend wenigstens ein elektronisches Etikett (2') nach Anspruch 6 oder 7.

10. Ein elektromagnetischer Transponder, der das Etikett nach Anspruch 6 oder 7 und einen mit der elektronischen Schaltung verbundenen Sensor aufweist.

11. Verwendung des Etiketts nach Anspruch 6 oder 7 im Boden.

12. Eine Leitung (3), die wenigstens einen Resonator (4) nach Anspruch 5 aufweist.

13. Eine Verpackung (9), die wenigstens einen Resonator (4) nach Anspruch 5 aufweist.

14. Ein elektromagnetischer Transponder, der wenigstens einen Resonator (4) nach Anspruch 4 und einen mit der elektronischen Schaltung verbundenen Sensor aufweist.

15. Verwendung des Resonators nach Anspruch 5 im Boden.

## Claims

1. An inductive antenna comprising:
an insulating substrate (46);
a first planar conductive winding (42) on a first surface of the substrate, interrupted at regular intervals to form a series of pairs of first conductive tracks (522, 524; 542, 544; 562, 564);
a second planar conductive winding (44) on a second surface of the substrate facing the first winding and interrupted facing the interruptions in the first winding to form a series of pairs of second conductive tracks (526, 528; 546, 548; 566, 568), each pair of first tracks defining, with the facing pair of second tracks, a resonant subassembly (52, 54, 56);
the first two tracks of a same subassembly being not interconnected and each being electrically connected to one and only one other first track of another subassembly or to a terminal (41, 43) of the antenna;
the second tracks of neighboring pairs being not electrically interconnected; and
one end (5224, 5244, 5424, 5444, 5624, 5644) of each first track being electrically connected (523, 543, 563, 525, 545, 565) to one end (5284, 5264, 5484, 5464, 5684, 5664) of a second track of the concerned subassembly.

2. The antenna of claim 1, wherein the substrate (56) is flexible.

3. The antenna of any of the foregoing claims, having a thickness smaller than 1 millimeter.

4. The antenna of any of claims 1 to 3, further comprising a half-subassembly formed of a first track opposite to a second track and coupled to at least one subassembly.

5. A resonator comprising an antenna (4) according to any of the foregoing claims having interconnected terminals (41, 43) .

6. An electronic tag adapted to moist environments, comprising an electronic circuit connected to an antenna (4), wherein the antenna is that of any of claims 1 to 4.

7. The electronic tag of claim 6, wherein a matching circuit (5) comprising at least one inductive element (L2') and one capacitive element (C2) is interposed between the antenna and the electronic circuit.

8. A duct (3) comprising at least one electronic tag (2') of claim 6 or 7.

9. A package (9) comprising at least one electronic tag (2') of claim 6 or 7.

10. An electromagnetic transponder comprising the tag of claim 6 or 7 and a sensor connected to the electronic circuit.

11. A use of the tag of claim 6 or 7, in the ground.

12. A duct (3) comprising at least one resonator (4) of claim 5.

13. A package (9) comprising at least one resonator (4) of claim 5.

14. An electromagnetic transponder comprising at least one resonator (4) of claim 4 and a sensor connected to the electronic circuit.

15. Use of the resonator of claim 5 in the ground.
